# EUROPÄISCHE PATENTSCHRIFT

(11) **EP 2 709 801 B1**
(45) Veröffentlichungstag und Bekanntmachung des Hinweises auf die Patenterteilung: **08.05.2019**
(21) Anmeldenummer: 12711123.5
(22) Anmeldetag: 16.03.2012
(51) Int. Cl.: B25D 17/08, B23B 31/12, B23B 31/107

(54) **WERKZEUGAUFNAHME**
TOOL HOLDER
PORTE-OUTILS

(30) Priorität: 16.05.2011 DE 102011075856; 27.05.2011 DE 102011076579
(43) Veröffentlichungstag der Anmeldung: 26.03.2014
(73) Patentinhaber: Robert Bosch GmbH, 70442 Stuttgart (DE)
(72) Erfinder: MUELLER, Rolf, 70771 Leinfelden-Echterdingen (DE); KOEPF, Christian, 73770 Denkendorf (DE); WEISS, Michael, 70563 Stuttgart (DE)
(86) Internationale Anmeldenummer: PCT/EP2012/054644
(87) Internationale Veröffentlichungsnummer: WO 2012/156120

(56) Entgegenhaltungen:
- EP-B1- 0 108 411
- EP-B1- 0 618 031

## Beschreibung

### Stand der Technik

Es sind bereits Bohrhämmer mit Werkzeugaufnahmen bekannt, die eine Fixiereinheit zu einer kraftschlüssigen und eine Fixiereinheit zu einer formschlüssigen Fixierung aufweisen, wobei ein Formschlusselement durch eine Federeinheit mit einer Spannkraft beaufschlagt wird. EP 0 618 031 B offenbart eine Werkzeugaufnahme nach dem Oberbegriff des Anspruchs 1.

### Offenbarung der Erfindung

Die Erfindung geht aus von einer Werkzeugaufnahme, insbesondere einer Werkzeugaufnahme für einen Bohrhammer, mit zumindest einer ersten Fixiereinheit, die zumindest ein Kraftschlusselement aufweist und dazu vorgesehen ist, ein Bearbeitungswerkzeug entlang einer Bewegungsachse mit einem Kraftschluss zu fixieren, einer zweiten Fixiereinheit, die zumindest ein Formschlusselement aufweist und dazu vorgesehen ist, in zumindest einem Betriebszustand, gemeinsam mit einem Formschlussmittel eines Bearbeitungswerkzeugs einen Bewegungsspielraum einer Bewegung des Bearbeitungswerkzeugs entlang einer Bewegungsachse zu begrenzen, und mit einer Federeinheit, die dazu vorgesehen ist, das Formschlusselement in zumindest einem Betriebszustand mit einer Spannkraft zu beaufschlagen, wobei die Federeinheit von einem sich koaxial zur Bewegungsachse erstreckenden Federelement gebildet ist.

Es wird vorgeschlagen, dass in zumindest einem Betriebszustand die Federeinheit und das zumindest eine Kraftschlusselement zumindest teilweise bezüglich der Bewegungsachse radial überdeckend angeordnet sind. Unter einer "Fixiereinheit" soll insbesondere eine Einheit verstanden werden, die dazu vorgesehen ist, ein Bearbeitungswerkzeug in der Werkzeugaufnahme zu fixieren. Darunter, dass ein Bearbeitungswerkzeug "fixiert" ist, soll insbesondere verstanden werden, dass sich ein Kopplungsbereich, insbesondere ein Schaft, des Bearbeitungswerkzeugs in einem Aufnahmebereich der Werkzeugaufnahme befindet und insbesondere maximal ein Rotationsfreiheitsgrad und/oder maximal ein Translationsfreiheitsgrad teilweise frei sind. Darunter, dass ein Translationsfreiheitsgrad "teilweise frei" ist, soll insbesondere verstanden werden, dass das Bearbeitungswerkzeug bezüglich der Werkzeugaufnahme um eine Strecke von maximal 5 cm, insbesondere maximal 2 cm, vorzugsweise maximal 1,5 cm, und insbesondere mindestens 3 mm entlang einer Bewegungsachse beweglich ist. Darunter, dass ein Rotationsfreiheitsgrad "teilweise frei" ist, soll insbesondere verstanden werden, dass das Bearbeitungswerkzeug bezüglich der Werkzeugaufnahme um einen Winkel von maximal 360°, insbesondere maximal 180°, vorzugsweise maximal 45°, besonders vorteilhaft maximal 10°, vorzugsweise maximal 5°, und insbesondere zumindest 3° um eine Rotationsachse drehbar ist. Unter einem "Kraftschlusselement" soll insbesondere ein bezüglich eines Grundkörpers der Werkzeugaufnahme beweglich gelagertes Element verstanden werden, das dazu vorgesehen ist, mit einer Spannkraft auf das Bearbeitungswerkzeug zu wirken. Insbesondere wird eine Spannkraft dabei durch eine zumindest im Wesentlichen elastische, insbesondere minimale Verformung des Kraftschlusselements, des Grundkörpers und/oder des Bearbeitungswerkzeugs erzielt. Unter einem "Formschlusselement" soll insbesondere ein Element verstanden werden, das zumindest ein Formschlussmittel, insbesondere eine Ausformung, insbesondere eine Vertiefung, eine Erhebung und/oder eine Kombination der beiden, aufweist und dazu vorgesehen ist, mit einem korrespondierenden Formschlussmittel eines dafür geeigneten Bearbeitungswerkzeugs zusammenzuwirken. Vorzugsweise ist das Formschlusselement in einer Lagereinheit entlang einer Lagerachse beweglich gelagert. Unter einem "Bearbeitungswerkzeug" soll insbesondere ein Werkzeug verstanden werden, das zu einer Bearbeitung eines Werkstücks und/oder eines zu bearbeitenden Materials vorgesehen ist. Insbesondere ist dieses als Rotations- und/oder Schlagwerkzeug, vorzugsweise als ein Bohr- und/oder Meißelwerkzeug, ausgebildet. Vorzugsweise weist das Bearbeitungswerkzeug zumindest einen, vorzugsweise zylindrischen Kopplungsbereich auf, der dazu vorgesehen ist, in die Werkzeugaufnahme eingeführt zu werden. Insbesondere weist der Kopplungsbereich eine Länge auf, die zumindest doppelt so groß ist, insbesondere zumindest dreimal so groß ist, vorzugsweise zumindest fünfmal so groß ist, wie ein Durchmesser des zylindrischen Kopplungsbereichs. Unter einer "Bewegungsachse" soll insbesondere eine Achse verstanden werden, entlang der ein Bearbeitungswerkzeug während eines Einlege- oder eines Entnahmevorgangs zumindest im Wesentlichen geführt wird. Vorzugsweise entspricht eine Bewegungsachse einer Zentralachse eines Aufnahmebereichs, insbesondere eines Lochs, der dazu vorgesehen ist, das Bearbeitungswerkzeug bei dem Einlege- oder Entnahmevorgang zu führen. Unter einem "Loch" soll insbesondere eine Ausnehmung in einem Bauteil verstanden werden, die entlang einer Verbindungslinie, insbesondere einer Verbindungskurve, vorzugsweise einer Geraden, zwischen zwei Oberflächenpunkten des Bauteils das Bauteil durchdringt und dabei vorzugsweise an zumindest einem Punkt der Linie im Querschnitt von Material des Bauteils umgegeben ist. Insbesondere weist das Loch eine Länge auf, die zumindest doppelt so groß, insbesondere zumindest dreimal so groß, vorzugsweise zumindest fünfmal so groß ist, wie ein Durchmesser des Lochs. Vorzugsweise weist der Aufnahmebereich in einer Aufsicht entlang der Bewegungsachse einen zumindest im Wesentlichen runden Querschnitt auf. Darunter, dass ein "Bewegungsspielraum begrenzt" ist, soll insbesondere verstanden werden, dass es, insbesondere in einem Betriebszustand mit fixiertem Bearbeitungswerkzeug, zumindest zwei Punkte gibt, über die ein Hinwegbewegen des Bearbeitungswerkzeugs verhindert wird. Vorzugsweise sind die Punkte um eine Begrenzungsstrecke von einander entfernt, die insbesondere durch Erstreckungen des Formschlusselements und des Formschlussmittels des Bearbeitungswerkzeugs bestimmt ist. Insbesondere beträgt die Begrenzungsstrecke zumindest 3 mm, insbesondere zumindest 5 mm, vorzugsweise zumindest 10 mm. Alternativ sind insbesondere Ausgestaltungen des Bearbeitungswerkzeugs denkbar, die dazu führen, dass die zumindest zwei Punkte zu einem einzelnen Punkt zusammenfallen. Insbesondere beträgt die Begrenzungsstrecke zumindest ein Viertel, insbesondere zumindest eine Hälfte, vorzugsweise zumindest ein Ganzes, eines maximalen Durchmessers des Kopplungsbereichs des Bearbeitungswerkzeugs.

Unter einem "Federelement" soll insbesondere ein makroskopisches Element verstanden werden, das zumindest eine Erstreckung aufweist, die in einem normalen Betriebszustand um zumindest 10%, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Vorzugsweise wird das Formschlusselement in einem Betriebszustand mit einer Spannkraft beaufschlagt, in dem es aus einer Standardposition ausgelenkt ist, insbesondere während einer Aufnahme eines Bearbeitungswerkzeugs. Darunter, dass sich zwei Elemente bezüglich einer Achse "radial überdecken", soll insbesondere verstanden werden, dass zumindest eine Gerade, die die Achse senkrecht schneidet, ebenfalls beide Elemente schneidet und bevorzugt, ausgehend von der Achse, zuerst das eine und dann das andere Element schneidet. Es kann insbesondere eine kurze Baulänge erreicht werden.

Weiterhin wird vorgeschlagen, dass die Federeinheit bezüglich der Bewegungsachse radial außerhalb des zumindest einen Kraftschlusselements angeordnet ist. Darunter, dass ein erstes Element "radial außerhalb" eines zweiten Elements angeordnet ist, soll insbesondere verstanden werden, dass eine Gerade, ausgehend von der Bewegungsachse, zuerst das zweite Element und dann das erste Element schneidet. Es kann eine einfache Konstruktion erreicht werden.

In einer Weiterbildung der Erfindung wird vorgeschlagen, dass die Federeinheit und das zumindest eine Kraftschlusselement in zumindest einem Betriebszustand über einen Bereich von zumindest 1 mm, insbesondere zumindest 3 mm, vorteilhaft zumindest 5 mm, vorzugsweise zumindest 7 mm, entlang der Bewegungsachse radial überdeckend angeordnet sind. Darunter, dass sich die Federeinheit und das zumindest eine Kraftschlusselement "über einen Bereich" entlang einer Achse radial überdecken, soll insbesondere verstanden werden, dass es über diesen Bereich an zumindest 30 %, insbesondere zumindest 50 %, vorzugsweise zumindest 70 %, der Punkte der Achse in diesem Bereich jeweils eine auf der Achse senkrechte Gerade gibt, die den jeweiligen Punkt der Achse, die Federeinheit und zumindest eines der Kraftschlusselemente schneidet. Es kann insbesondere eine Platzersparnis erreicht werden.

Weiterhin wird vorgeschlagen, dass das Formschlusselement als Bolzen ausgebildet ist. Unter einem "Bolzen" soll insbesondere ein Bauteil verstanden werden, das eine Länge aufweist, die größer als 100 %, insbesondere größer als 130 %, vorteilhaft größer als 170 %, vorzugsweise größer als 200 %, eines maximalen Durchmessers des Bauteils ist. Vorzugsweise erstreckt sich die Länge des Bolzens in einem montierten Zustand entlang der Lagerachse. Unter einem "Durchmesser" des Bolzens an einer Stelle soll insbesondere ein Durchmesser eines kleinsten Kreises, insbesondere eines Kreises, der in einer Ebene liegt, die senkrecht zur Lagerachse orientiert ist und die Stelle enthält, verstanden werden, der den Bolzen komplett umschließt. Vorzugsweise weist der Bolzen quer zur Lagerachse einen runden Querschnitt auf, wodurch insbesondere ein Verklemmen des Bolzens in der Lagereinheit vermieden werden kann. Insbesondere weist der Bolzen entlang der Lagerachse eine Veränderung des Durchmessers auf, die als Haltemittel dient. Es kann insbesondere ein geringer Verschleiß erreicht werden, wobei insbesondere Kontaktflächen zwischen dem Formschlusselement und der Lagereinheit und/oder dem Formschlussmittel größer ausgelegt sind als bei einer Ausgestaltung als Kugel, bei der Kräfte, die insbesondere zur Abnutzung führen, nur auf wenige Punkte verteilt werden.

Weiterhin wird vorgeschlagen, dass das Formschlusselement entlang einer Lagerachse beweglich gelagert ist, die mit der Bewegungsachse einen Winkel einschließt, der weniger als 25°, insbesondere weniger als 15°, vorteilhaft weniger als 10°, vorzugsweise weniger als 5°, von 30° abweicht. Vorzugsweise liegt ein Schnittpunkt der Lagerachse bzw. einer der Lagerachse parallelen Achse mit der Bewegungsachse näher an einem vorderen Ende der Werkzeugaufnahme als ein beliebiger Punkt der Lagerachse, der einen Punkt des Formschlusselements schneidet und/oder beinhaltet. Darunter, dass eine erste und eine zweite Achse "einen Winkel einschließen", soll insbesondere verstanden werden, dass eine, zu der ersten Achse parallele Achse, die die zweite Achse schneidet, mit der zweiten Achse einen Winkel einschließt. Vorzugsweise schneidet die erste Achse die zweite Achse. Vorzugsweise liegt ein Schnittpunkt der Lagerachse bzw. einer der Lagerachse parallelen Achse mit der Bewegungsachse näher an einem vorderen Ende der Werkzeugaufnahme als ein beliebiger Punkt der Lagerachse, der einen Punkt des Formschlusselements schneidet und/oder beinhaltet. Unter einem "vorderen" Ende der Werkzeugaufnahme soll insbesondere ein Bereich der Werkzeugaufnahme verstanden werden, der von allen Bereichen der Werkzeugaufnahme am nächsten an einem Bearbeitungsende, insbesondere einer Spitze, eines in der Werkzeugaufnahme fixierten Bearbeitungswerkzeugs liegt. Unter einem "Bearbeitungsende" soll insbesondere ein Ende des Bearbeitungswerkzeugs verstanden werden, das dem Kopplungsbereich gegenüberliegt. Es kann insbesondere eine sichere Lagerung und/oder Fixierung erreicht werden.

In einer weiteren Ausgestaltung wird vorgeschlagen, dass die Werkzeugaufnahme einen Werkzeugaufnahmebereich aufweist, der von dem zumindest einen Kraftschlusselement begrenzt wird und einen Durchmesser von maximal 15 mm, insbesondere maximal 13 mm, vorteilhaft maximal 10 mm, insbesondere maximal 6 mm aufweist. Es kann insbesondere eine kurze Baulänge erreicht werden.

In einer weiteren Ausgestaltung der Erfindung wird vorgeschlagen, dass das Federelement als Kegelfeder ausgebildet ist. Gegenüber alternativen Ausgestaltungen mit beispielsweise Tellerfedern und/oder Zylinderfedern kann insbesondere eine Platz und Material sparende Ausführung erreicht werden.

In einer vorteilhaften Ausgestaltung weist die Werkzeugaufnahme zumindest ein Blockiermittel auf, das dazu vorgesehen ist, in zumindest einem Betriebszustand einen Spannvorgang der ersten Fixiereinheit zu vermeiden. Insbesondere wird das Blockiermittel zumindest durch ein fixiertes Bearbeitungswerkzeug über einen Mechanismus oder direkt in seiner Position verändert. Vorzugsweise greift das Blockiermittel in Formschlussmittel des Übertragungsmittels und/oder des Betätigungsmittels, um eine Bewegung zu vermeiden. Es kann insbesondere ein sicherer Betrieb gewährleistet werden.

Die Erfindung geht ferner aus von einer tragbaren Werkzeugmaschine, insbesondere von einer Handwerkzeugmaschine, mit einer erfindungsgemäßen Werkzeugaufnahme. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Es kann vorteilhaft ein hoher Bedienkomfort für einen Bediener der Handwerkzeugmaschine erreicht werden.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine erfindungsgemäße Handwerkzeugmaschine in schematischer Darstellung,
- Fig. 2: eine schematische Ansicht eines Schnitts durch eine erfinddungsgemäße Werkzeugaufnahme,
- Fig. 3: eine Aufsicht auf eine Kopplungseinheit entgegen einer Einsteckrichtung,
- Fig. 4: eine Schnittdarstellung analog Figur 2 in einer Löseposition und
- Fig. 5: eine weitere Schnittdarstellung durch die Werkzeugaufnahme.

### Beschreibung des Ausführungsbeispiels

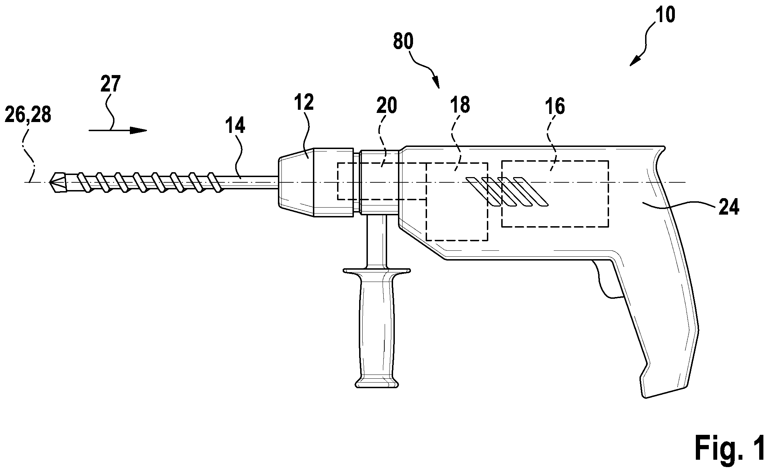

Figur 1 zeigt eine als Bohrhammer ausgebildete elektrische Handwerkzeugmaschine 10 mit einer erfindungsgemäßen Werkzeugaufnahme 12. Die Werkzeugaufnahme 12 ist dazu vorgesehen, ein Bearbeitungswerkzeug 14, das als Bohrer und/oder Meißel ausgebildet sein kann, aufzunehmen. Das Bearbeitungswerkzeug 14 ist als SDS-Werkzeug ausgebildet. Das Bearbeitungswerkzeug 14 wird entlang einer Bewegungsachse 26 in Einsteckrichtung 27 in die Werkzeugaufnahme 12 eingeführt. Weiterhin weist die elektrische Handwerkzeugmaschine 10 eine Motoreinheit 16 und eine Getriebeeinheit 18 auf. Die Getriebeeinheit 18 weist dabei eine Schalteinheit auf, die dazu vorgesehen ist, zwischen drehendem Abtrieb, schlagendem Abtrieb und drehendem und schlagendem Abtrieb umzuschalten (nicht detailliert dargestellt). Ein von der Motoreinheit 16 erzeugtes Drehmoment wird von der Getriebeeinheit 18 in eine von einem Bediener eingestellte Betriebsfunktion gewandelt und an eine Abtriebseinheit 20, die ein Schlagwerk aufweist, geleitet. Die Abtriebseinheit 20 ist direkt mit der Werkzeugaufnahme 12 verbunden. Bei drehendem Betrieb fällt die Bewegungsachse 26 mit einer Rotationsachse 28 des Bearbeitungswerkzeugs 14 zusammen. Die Motoreinheit 16, die Getriebeeinheit 18 und die Abtriebseinheit 20 sind von zwei Gehäusehalbschalen 24 umschlossen. Grundsätzlich sind auch Ausgestaltungen denkbar, in denen die Einheiten in zwei oder mehreren topfartigen Gehäuseteilen angeordnet sind.

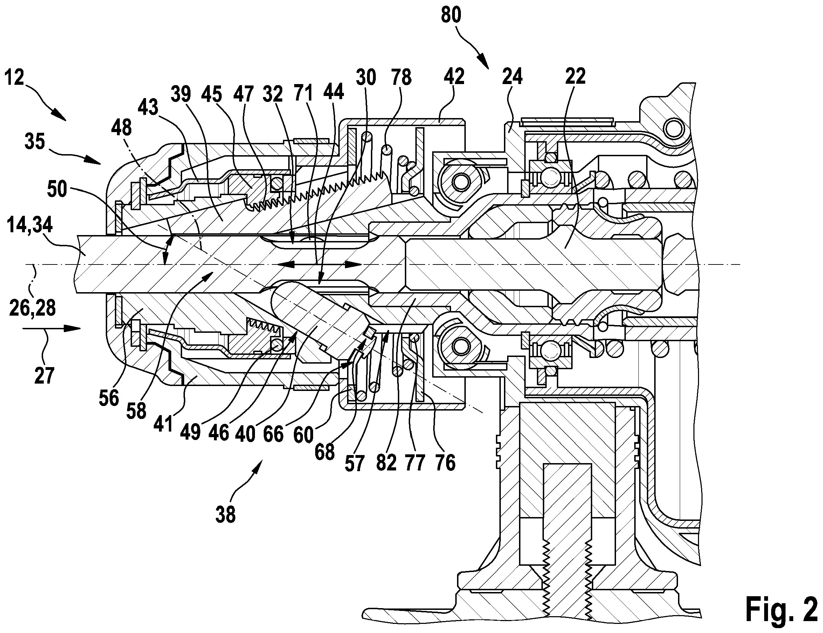

Figur 2 zeigt einen Schnitt durch die Werkzeugaufnahme 12, der die Bewegungsachse 26 enthält. Die Werkzeugaufnahme 12 weist eine erste Fixiereinheit 35 auf, die drei Kraftschlusselemente 39 aufweist und dazu vorgesehen ist, ein Bearbeitungswerkzeug (nicht dargestellt) entlang der Bewegungsachse 26 mit einem Kraftschluss zu fixieren. Die Kraftschlusselemente 39 sind als Spannbacken ausgebildet. Das Bearbeitungswerkzeug ist dabei beispielsweise als Rundschaftwerkzeug, also als Bearbeitungswerkzeug mit einem runden Schaft 34, ausgebildet oder weist ein beispielsweise sechseckiges Schaftprofil auf. Die Werkzeugaufnahme 12 weist einen Werkzeugaufnahmebereich 58 auf, der von den drei Kraftschlusselementen 39 begrenzt ist und einen Durchmesser von maximal 10 mm aufweist. Die Kraftschlusselemente 39 sind in Ausnehmungen eines Grundkörpers 56 der Werkzeugaufnahme 12 angeordnet. Die Kraftschlusselemente 39 sind entlang von Achsen gelagert, die mit der Bewegungsachse 26 jeweils einen Winkel von ca. 15° einschließen. Über ein als Hülse ausgebildetes Betätigungsmittel 41 kann ein Bediener Positionen der Kraftschlusselemente 39 verändern, also Bearbeitungswerkzeuge einspannen oder lösen. Das Betätigungsmittel 41 ist mit einer Spannhülse 43 drehfest verbunden, die eine Rotation des Betätigungsmittels 41 um die Bewegungsachse 26 auf einen Gewindering 45 überträgt. Der Gewindering 45 steht mit Verzahnungen der Kraftschlusselemente 39 in Gewindeeingriff 47. Eine Rotation des Betätigungsmittels 41 wird so in lineare Bewegungen der Kraftschlusselemente 39 umgesetzt. Zwischen dem Gewindering 45 und dem Grundkörper 56 ist ein Axiallager 49 angeordnet, das einen leichteren Spannvorgang und somit eine höhere Spannkraft ermöglicht.

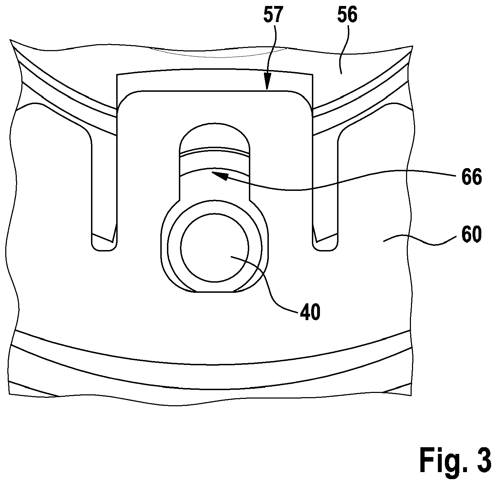

Die Werkzeugaufnahme 12 weist eine zweite Fixiereinheit 38 auf, die ein Formschlusselement 40 aufweist und dazu vorgesehen ist, in einem Betriebszustand mit eingelegtem Bearbeitungswerkzeug 14 mit einem Formschlussmittel 30, 32 des Bearbeitungswerkzeugs 14 einen Bewegungsspielraum 44 einer Bewegung des Bearbeitungswerkzeugs 14 entlang der Bewegungsachse 26 zu begrenzen. Das Formschlusselement 40 ist als Bolzen ausgebildet und in einer Lagereinheit 46 entlang einer Lagerachse 48 beweglich gelagert. Die Lagerachse 48 schließt mit der Bewegungsachse 26 einen Winkel 50 von 30° ein. Weiterhin weist die Werkzeugaufnahme 12 eine Federeinheit 78 auf, die dazu vorgesehen ist, das Formschlusselement 40 in einem Betriebszustand, in dem dieses aus seiner Standardposition ausgelenkt ist, insbesondere während eines Einsteckvorgangs des Bearbeitungswerkzeugs 14, mit einer Spannkraft zu beaufschlagen. Eine Spannkraft der Federeinheit 78 wirkt auf eine Kopplungseinheit 60. Die Kopplungseinheit 60 ist als Ring ausgebildet, von dem nach innen eine Zunge in einem Winkel, der dem Winkel 50 entspricht, absteht. Die Kopplungseinheit 60 weist ein Führungsmittel 66 auf, in das das Formschlusselement 40 mit einem Einstich 68, der an einem der Bewegungsachse 26 abgewandten Ende des Formschlusselements 40 angeordnet ist, eingreift. Der Einstich 68 ist von einem Pilzzapfen gebildet. Das Führungsmittel 66 ist als Langloch ausgebildet, das an einer Übergangsstelle von der Zunge zum Ring eine Aufweitung aufweist, durch die der Pilzzapfen geführt werden kann (Figur 3). Ist das Formschlusselement 40 entlang der Lagerachse 48 ausgelenkt, ist die Kopplungseinheit 60 in Einsteckrichtung 27 verschoben und die Federeinheit 78 komprimiert. Die Zunge der Kopplungseinheit 60 wird dabei in einer Nut 57 im Grundkörper 56 geführt. Die Federeinheit 78 weist ein einzelnes Federelement auf, das als Kegelfeder ausgebildet ist. Ein Ende der Federeinheit 78 mit großem Durchmesser presst gegen die Kopplungseinheit 60. Ein anderes Ende der Federeinheit 78 mit kleinem Durchmesser presst gegen einen Abstandsring 76, der sich mit einem Sicherheitsring 77 gegen den Grundkörper 56 stützt. Die Federeinheit 78 wird über eine Ausformung des Abstandsrings 76 bezüglich der Bewegungsachse 26 zentriert. Der Abstandsring 76 dient weiterhin einer Lagerung eines Betätigungsmittels 42, das dazu vorgesehen ist, eine Begrenzung des Bewegungsspielraums 44 aufzuheben.

In einem Betriebszustand, in dem die Kraftschlusselemente 39 maximal geöffnet sind, sind die Federeinheit 78 und die drei Kraftschlusselemente 39 teilweise bezüglich der Bewegungsachse 26 radial überdeckend angeordnet. Die Federeinheit 78 ist radial außerhalb des zumindest einen Kraftschlusselements 39 angeordnet. Die Federeinheit 78 und die drei Kraftschlusselemente 39 sind in einem Betriebszustand, in dem die Kraftschlusselemente 39 maximal geöffnet sind, über einen Bereich von ca. 7 mm entlang der Bewegungsachse 26 radial überdeckend angeordnet. Weiterhin sind in diesem Betriebszustand ein Teil der Kopplungseinheit 60 und die Kraftschlusselemente 39 bezüglich der Bewegungsachse 26 radial überdeckend angeordnet. Dieser Teil der Kopplungseinheit 60 ist radial außerhalb der Kraftschlusselemente 39 angeordnet. Bei diesem Teil der Kopplungseinheit 60 handelt es sich um den Ring, von dem nach innen eine Zunge absteht.

Die Werkzeugaufnahme 12 ist fest mit einem Werkzeugmaschinenrumpf 80 verbunden. Der Grundkörper 56 ist dabei mit einer als Schlagrohr ausgebildeten Hohlwelle 82 der Abtriebseinheit 20 verpresst. Der Grundkörper 56 umschließt dabei die Hohlwelle 82 und reicht mit einem Ende bis in einen Bereich, der von den Gehäusehalbschalen 24 umgeben ist. In der Hohlwelle 82 ist ein Schlagbolzen 22 angeordnet, der dazu vorgesehen ist, das Bearbeitungswerkzeug 14 entlang der Bewegungsachse 26 zu beschleunigen.

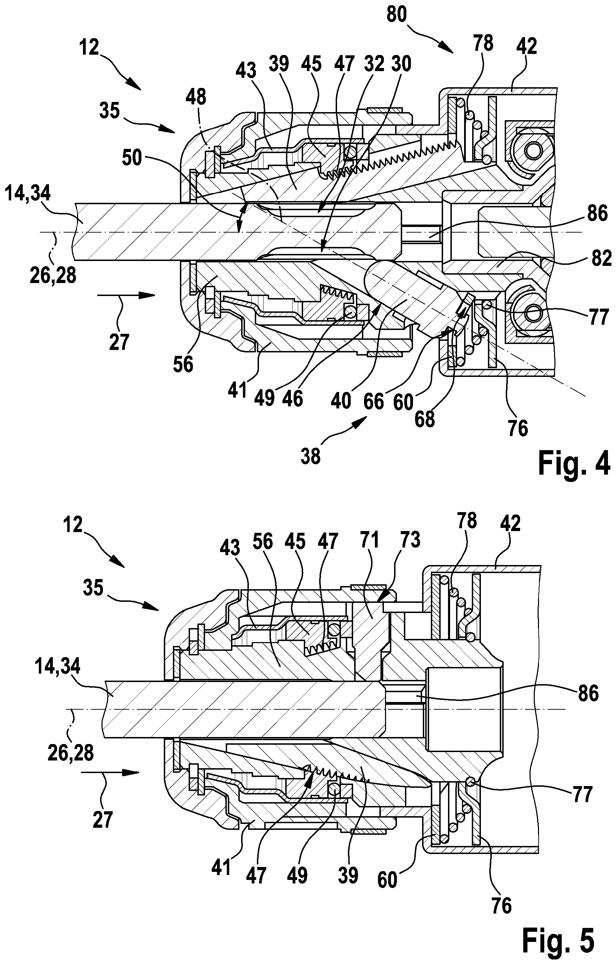

Figur 4 zeigt die Werkzeugaufnahme 12 während eines Lösevorgangs des Bearbeitungswerkzeugs 14. Das Betätigungsmittel 41 ist als Hülse ausgebildet. Durch Bewegung des Betätigungsmittels 41 in Einsteckrichtung 27 wird die Kopplungseinheit 60, die an einer Kante des Betätigungsmittels 42 gestützt ist, ebenfalls in Einsteckrichtung 27 gegen die Federeinheit 78 verschoben. Die Federeinheit 78 wird dabei komprimiert und erhöht ihre Spannkraft, die dazu vorgesehen ist, die Kopplungseinheit 60 und somit das Betätigungsmittel 42 und das Formschlusselement 40 in ihre Ausgangspositionen zurückzudrängen. Das Formschlusselement 40 wird, geführt durch das Führungsmittel 66 der Kopplungseinheit 60, entlang der Lagerachse 48 nach außen bewegt. Das Bearbeitungswerkzeug 14 kann entfernt werden. Das Betätigungsmittel 42 ist teilweise zwischen dem Grundkörper 56 und dem Betätigungsmittel 41 angeordnet und gelagert. Ein Bereich des Betätigungsmittels 42, der die Federeinheit 78 umgibt, weist einen größeren Durchmesser auf als das Betätigungsmittel 41. Das Bearbeitungswerkzeug 14 weist weitere Formschlussmittel (nicht dargestellt) auf, die in Formschlussmitteln 86 des Grundkörpers 56 geführt werden und für einen Formschluss in Rotationsrichtung sorgen.

In Figur 5 ist ein weiterer Schnitt durch die Werkzeugaufnahme 12 dargestellt, der die Bewegungsachse 26 enthält. Die Werkzeugaufnahme 12 weist ein Blockiermittel 71 auf, das dazu vorgesehen ist, in einem Betriebszustand, in dem ein Bearbeitungswerkzeug 14 mit Formschlussmitteln 30, 32 in der Werkzeugaufnahme 12 fixiert ist, einen Spannvorgang der ersten Fixiereinheit 35 zu vermeiden. Das Blockiermittel 71 ist als Bolzen ausgebildet und ist dazu vorgesehen, wenn es durch ein eingelegtes Bearbeitungswerkzeug 14 nach außen gepresst ist, in eine Verzahnung 73 des Betätigungsmittels 41 einzugreifen und somit eine Bewegung des Betätigungsmittels 41 zu blockieren.

## Patentansprüche

1. Werkzeugaufnahme, insbesondere für einen Bohrhammer, mit zumindest einer ersten Fixiereinheit (35), die zumindest ein Kraftschlusselement (39) aufweist und dazu vorgesehen ist, ein Bearbeitungswerkzeug entlang einer Bewegungsachse (26) mit einem Kraftschluss zu fixieren, einer zweiten Fixiereinheit (38), die zumindest ein Formschlusselement (40) aufweist und dazu vorgesehen ist, in zumindest einem Betriebszustand, gemeinsam mit einem Formschlussmittel (30, 32) eines Bearbeitungswerkzeugs (14) einen Bewegungsspielraum (44) einer Bewegung des Bearbeitungswerkzeugs (14) entlang einer Bewegungsachse (26) zu begrenzen, und mit einer Federeinheit (78), die dazu vorgesehen ist, das Formschlusselement (40) in zumindest einem Betriebszustand mit einer Spannkraft zu beaufschlagen, wobei die Federeinheit (78) von einem sich koaxial zur Bewegungsachse (26) erstreckenden Federelement gebildet ist und **dadurch gekennzeichnet, dass** in zumindest einem Betriebszustand die Federeinheit (78) und das zumindest eine Kraftschlusselement (39) zumindest teilweise bezüglich der Bewegungsachse (26) radial überdeckend angeordnet sind.

2. Werkzeugaufnahme nach Anspruch 1,
**dadurch gekennzeichnet, dass**
die Federeinheit (78) radial außerhalb des zumindest einen Kraftschlusselements (39) angeordnet ist.

3. Werkzeugaufnahme nach einem der vorhergehenden Ansprüche,
**dadurch gekennzeichnet, dass**
die Federeinheit (78) und das zumindest eine Kraftschlusselement (39) in zumindest einem Betriebszustand über einen Bereich von zumindest 1 mm entlang der Bewegungsachse (26) radial überdeckend angeordnet sind.

4. Werkzeugaufnahme nach einem der vorhergehenden Ansprüche,
**dadurch gekennzeichnet, dass**
das Formschlusselement (40) als Bolzen ausgebildet ist.

5. Werkzeugaufnahme nach einem der vorhergehenden Ansprüche,
**dadurch gekennzeichnet, dass**
das Formschlusselement (40) entlang einer Lagerachse (48) beweglich gelagert ist, die mit der Bewegungsachse (26) einen Winkel einschließt, der weniger als 25° von 30° abweicht.

6. Werkzeugaufnahme nach einem der vorhergehenden Ansprüche,
**gekennzeichnet durch**
einen Werkzeugaufnahmebereich (58), der von dem zumindest einen Kraftschlusselement (39) begrenzt ist und einen Durchmesser von maximal 15 mm aufweist.

7. Werkzeugaufnahme nach einem der vorhergehenden Ansprüche,
**dadurch gekennzeichnet, dass**
das Federelement als Kegelfeder ausgebildet ist.

8. Werkzeugaufnahme nach einem der vorhergehenden Ansprüche,
**gekennzeichnet durch**
zumindest ein Blockiermittel (71), das dazu vorgesehen ist, in zumindest einem Betriebszustand einen Spannvorgang der ersten Fixiereinheit (35) zu vermeiden.

9. Tragbare Werkzeugmaschine, insbesondere Handwerkzeugmaschine, mit einer Werkzeugaufnahme (12) nach einem der vorhergehenden Ansprüche.

## Claims

1. Tool receptacle, in particular for a hammer drill, having at least one first fixing unit (35), which has at least one force-fitting element (39) and is intended to fix a machining tool along a movement axis (26) by way of a force fit, having a second fixing unit (38), which has at least one form-fitting element (40) and is intended, in at least one operating state, to limit, together with a form-fitting means (30, 32) of a machining tool (14), a clearance (44) for a movement of the machining tool (14) along a movement axis (26), and having a spring unit (78), which is intended to subject the form-fitting element (40) to a clamping force in at least one operating state, wherein the spring unit (78) is formed by a spring element extending coaxially with the movement axis (26), and **characterized in that**, in at least one operating state, the spring unit (78) and the at least one force-fitting element (39) are arranged so as to radially overlap at least partially with regard to the movement axis (26).

2. Tool receptacle according to Claim 1, **characterized in that**
the spring unit (78) is arranged radially outside the at least one force-fitting element (39).

3. Tool receptacle according to either of the preceding claims,
**characterized in that**
the spring unit (78) and the at least one force-fitting element (39) are arranged so as to radially overlap over an area of at least 1 mm along the movement axis (26) in at least one operating state.

4. Tool receptacle according to one of the preceding claims,
**characterized in that**
the form-fitting element (40) is in the form of a pin.

5. Tool receptacle according to one of the preceding claims,
**characterized in that**
the form-fitting element (40) is mounted so as to be movable along a mounting axis (48) that encloses an angle with the movement axis (26) that deviates from 30° by less than 25°.

6. Tool receptacle according to one of the preceding claims,
**characterized by**
a tool-receptacle region (58) that is delimited by the at least one force-fitting element (39) and has a diameter of at most 15 mm.

7. Tool receptacle according to one of the preceding claims,
**characterized in that**
the spring element is in the form of a conical spring.

8. Tool receptacle according to one of the preceding claims,
**characterized by**
at least one blocking means (71), which is provided to prevent a clamping operation of the first fixing unit (35) in at least one operating state.

9. Portable power tool, in particular handheld power tool, having a tool receptacle (12) according to one of the preceding claims.

## Revendications

1. Porte-outil, en particulier pour un marteau perforateur, avec au moins une première unité de fixation (35), qui présente au moins un élément d'assemblage par adhérence (39) et qui est prévue pour fixer par adhérence un outil de travail le long d'un axe de mouvement (26), avec une seconde unité de fixation (38), qui présente au moins un élément d'assemblage par emboîtement (40) et qui est prévue pour limiter, dans au moins un état de fonctionnement, de concert avec un moyen d'assemblage par emboîtement (30, 32) d'un outil de travail (14), un espace de jeu de mouvement (44) d'un mouvement de l'outil de travail (14) le long d'un axe de mouvement (26), et avec une unité de ressort (78), qui est prévue pour soumettre l'élément d'assemblage par emboîtement (40) à une force de serrage dans au moins un état de fonctionnement, dans lequel l'unité de ressort (78) est formée par un élément de ressort s'étendant coaxialement à l'axe de mouvement (26), **caractérisé en ce que** dans au moins un état de fonctionnement l'unité de ressort (78) et ledit au moins un élément d'assemblage par adhérence (39) sont disposés au moins partiellement en recouvrement radial par rapport à l'axe de mouvement (26).

2. Porte-outil selon la revendication 1, **caractérisé en ce que** l'unité de ressort (78) est disposée radialement à l'extérieur dudit au moins un élément d'assemblage par adhérence (39).

3. Porte-outil selon l'une quelconque des revendications précédentes, **caractérisé en ce que** l'unité de ressort (78) et ledit au moins un élément d'assemblage par adhérence (39) sont disposés dans au moins un état de fonctionnement en recouvrement radial sur une zone d'au moins 1 mm le long de l'axe de mouvement (26).

4. Porte-outil selon l'une quelconque des revendications précédentes, **caractérisé en ce que** l'élément d'assemblage par emboîtement (40) est formé par un boulon.

5. Porte-outil selon l'une quelconque des revendications précédentes, **caractérisé en ce que** l'élément d'assemblage par emboîtement (40) est monté de façon mobile le long d'un axe d'appui (48), qui forme avec l'axe de mouvement (26) un angle qui s'écarte de 30° de moins de 25°.

6. Porte-outil selon l'une quelconque des revendications précédentes, **caractérisé par** une région de porte-outil (58), qui est limitée par ledit au moins un élément d'assemblage par adhérence (39) et qui présente un diamètre de 15 mm au maximum.

7. Porte-outil selon l'une quelconque des revendications précédentes, **caractérisé en ce que** l'élément de ressort est formé par un ressort conique.

8. Porte-outil selon l'une quelconque des revendications précédentes, **caractérisé par** au moins un moyen de blocage (71), qui est prévu pour éviter une opération de serrage de la première unité de fixation (35) dans au moins un état de fonctionnement.

9. Machine-outil portable, en particulier machine-outil manuelle, munie d'un porte-outil (12) selon l'une quelconque des revendications précédentes.
